# EUROPEAN PATENT APPLICATION

(11) **EP 1 967 404 A1**
(43) Date of publication of application: **10.09.2008**
(21) Application number: 07251001.9
(22) Date of filing: 09.03.2007
(51) Int. Cl.: B60K 15/035

(54) **Fuel tank venting and vapour recovery apparatus**

(71) Applicant: Delphi Technologies, Inc., Troy, Michigan 48007 (US)
(72) Inventor: Sanchez, Michel, Allondrelle, 54260 (FR); Bungartz, Gerhard, Bitburg 54634 (DE)
(74) Representative: Murgitroyd, Ian George

(57) **Abstract**

A venting and vapour recovery apparatus for a vehicle fuel tank, the fuel tank containing a fuel module including a fuel reservoir containing a fuel pump and one or more venturi jet pumps for drawing fuel from the lowermost regions of the fuel tank into the reservoir, the apparatus comprising a vent module (200,300) locatable within an upper region of the fuel tank for venting fuel vapour and air from the headspace of the fuel tank through a vent passage communicating with an adsorption canister, the vent module (200,300) comprising a liquid/gas separation means for preventing contamination of the adsorption canister with liquid fuel, wherein the liquid/gas separation means comprises a liquid trap (220,320) for draining liquid fuel from the vent module, the liquid trap (220) comprising a chamber (224,340), the chamber (224,340) being provided with at least one upper fuel inlet (228,330), communicating with the vent passage of the vent module (200,300), and a lower drain port (230,344), the drain port (230,344) communicating with the upstream side of a venturi jet pump associated with the fuel module, whereby liquid fuel collected in the chamber (224,340) of the liquid trap (220,320) is actively drained by means of the vacuum produced by the venturi jet pump (106).

## Description

The present invention relates to a fuel tank venting and vapour recovery apparatus and in particular a venting and vapour recovery apparatus for a vehicle fuel tank.

It is necessary to vent the air space in the upper regions of a vehicle fuel tank (known as the headspace) in order to avoid the formation of an air lock as a tank is emptied in use, during refuelling when air is displaced from the headspace as the tank is filled with fuel, and to compensate for pressure changes in the headspace due to evaporation of fuel and subsequent condensation during changes in ambient temperature.

However, modern vehicle emission standards place strict limits on the evaporative emission of fuel vapour from vehicle fuel tanks and fuel systems. To achieve these emission standards, most modern vehicles are equipped with venting and vapour recovery systems for preventing the release of fuel vapour during refilling, during vehicle operation and while the vehicle is stationary, while at the same time allowing the volume of air and fuel vapour in the tank to vary as the volume of fuel in the tank varies.

A typical venting and vapour recovery apparatus comprises a narrow filler neck to form a seal with a refuelling nozzle, to prevent fuel vapour escaping via the filler neck, and an adsorption canister containing an activated carbon filter material provided in a tank headspace vent passage, to trap fuel vapour while permitting the passage of air through a vent port to the atmosphere during refuelling of a vehicle. Periodically, during operation of the vehicle, adsorbed fuel vapour trapped in the canister is removed by drawing air through the canister through a purge line communicating with the air-intake system of the engine such that the desorbed fuel vapour is burnt in the engine.

Such systems have to satisfy the conflicting requirements of preventing the venting to the atmosphere of fuel vapour from the fuel tank while avoiding excessive flow restriction in the vent passage and resulting pressure variations within the tank during refilling and during draining of the tank during engine operation and during ambient temperature changes.

It is also necessary to prevent liquid fuel from contaminating the adsorption canister, for example if the fuel tank is overfilled or the vehicle is parked in an inclined position, and to prevent fuel leakage from the tank through the vent system in the event the vehicle is involved in a collision resulting in the vehicle rolling onto its side or roof.

A typical way to address such problems is to ensure that a minimum headspace volume, sufficient to avoid the risk of liquid fuel entering the adsorption canister, is maintained, thus limiting the volume of fuel that can be carried to considerably less than the total volume of the tank. It is desirable to maximise the ratio of useable volume to the total volume of the fuel tank by reducing the minimum headspace volume required while still providing reliable fuel tank venting without the risk of liquid fuel passing into the adsorption canister.

In order to draw the maximum possible volume of fuel from the fuel tank, the inlet of the fuel pump must draw fuel from the lowest point of the fuel tank. The shape of such fuel tanks is largely determined by the available space and the need to fit around other components of the vehicle, such as suspension, drive shafts and exhaust systems. Often such shape constraints lead to the formation of a number of compartments within the fuel tank, separated by raised areas, for example a raised saddle to clear a drive shaft. Thus it is necessary to draw fuel from all of such separate compartments to maximise fuel capacity available to the fuel pump. Such problem is usually overcome by the use of jet pumps that utilise the venturi effect to draw fuel from each isolated compartment to a single main compartment or to a separate reservoir in which the fuel pump is located, each jet pump being driven by a flow of fuel from the output of the fuel pump or by a return flow of over supplied fuel returned from the fuel rail. It is also necessary to provide an anti-siphoning check valve in the fuel supply pipe of each jet pump.

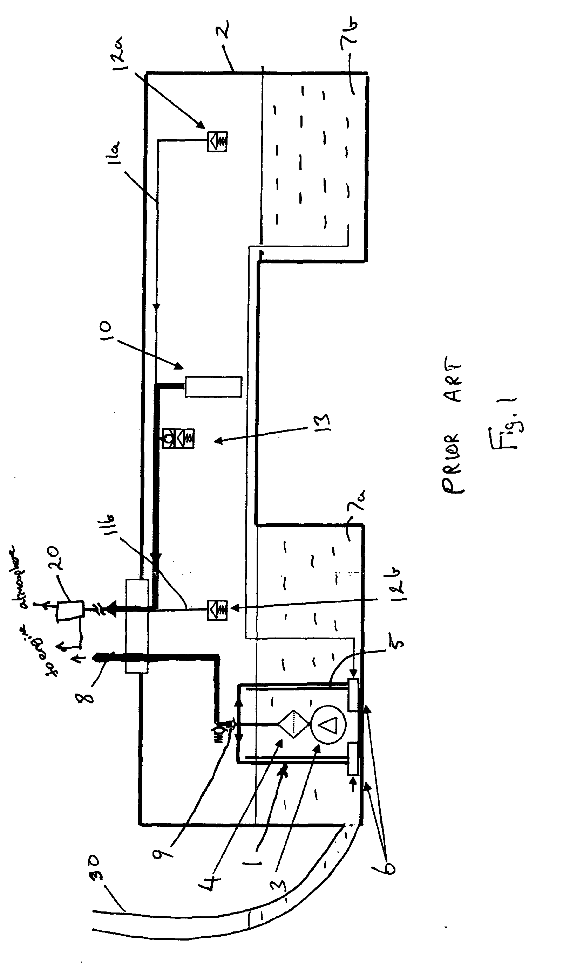

A known venting apparatus for a vehicle fuel tank is illustrated in Figure 1. The apparatus includes a fuel module 1 located within the fuel tank 2 and comprising a fuel pump 3 and a fuel filter 4 contained within a reservoir 5. One or more venturi jet pumps 6 are provided for drawing fuel into the fuel reservoir from the lowest regions of the fuel tank 7a,7b. A fuel delivery line 8 extends from the fuel pump, out of the tank to deliver fuel to the fuel system of the engine. A check valve 9 is provided in the fuel delivery line to prevent fuel from draining out of the fuel delivery line when the fuel pump is switched off and to maintain pressure within the fuel line. A filler pipe 30 is provided whereby fuel can be added to the fuel tank, the neck of the filler pipe typically being adapted to provide a gas tight fit around the end of a filler nozzle.

A fill limit vent valve 10 is provided in the upper region of the fuel tank to allow fuel vapour and air to be vented through an adsorption canister 20 during refilling while at the same time preventing overfilling of the fuel tank 2. The fill limit vent valve 10 typically includes a buoyant float to close the vent port of the valve when the fuel level reaches the vent valve 10 and lifts the float into contact with a valve seat, thus provoking nozzle shut off of a filling nozzle by providing a back pressure within the fuel tank and raising the fuel level within the filler pipe. The fill limit vent valve 10 is also typically arranged to close in the event of vehicle roll over, typically by providing a steel ball beneath the float to push the float against its valve seat and close the vent port if the tank (and vehicle) is inverted.

In order to ensure correct operation of the venting and vapour recovery apparatus when the vehicle is parked or operated on an inclined surface, a plurality of vent pipes 11 a, 11 b extend to respective locations adjacent the uppermost corners of the fuel tank headspace. The inlet end of each vent pipe is typically provided with a separate float valve 12a,12b, whereby the respective vent pipe is closed if its inlet end becomes submerged in fuel to avoid drawing liquid fuel into the vent system. Thus, regardless of the attitude of the vehicle, the inlet end of at least one vent pipe will be located in a region of the tank headspace containing air/fuel vapour.

A secondary vent valve 13 is provided upstream of the vent pipes 11 a, 11 b and the vent valve 10, the secondary vent valve 13 closing in the event of a vehicle roll over and providing a further float valve to close the fuel tank vent and maintain pressure in the headspace to hold fuel in the filler pipe and prevent overfilling. The secondary vent valve 13 also serves to drain the vent pipes of liquid fuel, thus providing the function of liquid/vapour separation in the vent system.

The numerous float valves and separate components of the known vapour control apparatus add to the cost and complexity of the vehicle fuel tank, and can lead to accessibility problems should one or more of the separate float valves fail. Furthermore, to ensure reliable operation of the venting and vapour recovery apparatus, in particular to prevent liquid fuel from entering the adsorption canister, the fill level vent valve 10 must close relatively early, leaving a considerable volume within the tank that cannot be used for the storage of fuel.

According to the present invention there is provided a venting and vapour recovery apparatus for a vehicle fuel tank, the fuel tank containing a fuel module including a fuel reservoir containing a fuel pump and one or more venturi jet pumps for drawing fuel from the lowermost regions of the fuel tank into the reservoir, the apparatus comprising a vent module locatable within an upper region of the fuel tank for venting fuel vapour and air from the headspace of the fuel tank through a vent passage communicating with an adsorption canister, the vent module comprising a liquid/gas separation means for preventing contamination of the adsorption canister with liquid fuel, wherein the liquid/gas separation means comprises a liquid trap for draining liquid fuel from the vent module, the liquid trap comprising a chamber, the chamber being provided with at least one upper fuel inlet, communicating with the vent passage of the vent module, and a lower drain port, the drain port communicating with the upstream side of a venturi jet pump associated with the fuel module, whereby liquid fuel collected in the chamber of the liquid trap is actively drained by means of the vacuum produced by the venturi jet pump.

Preferably a buoyant float is provided within the liquid trap chamber, said float engaging the drain port of the liquid trap chamber to close said drain port when the liquid trap chamber is drained of fuel to prevent air from being drawn into the venturi jet pump.

The vent module may further comprises a fuel tank fill limit device for provoking nozzle shut off when the fuel in the fuel tank reaches a predetermined level during a filling operation, the fuel tank fill limit device comprising a further float arranged to close communication between the vent passage and the headspace of the fuel tank when said predetermined fuel level is reached. Preferably the further float of the fuel tank fill limit is provided in a chamber having a vent inlet communicating with the fuel tank headspace, and an upper vent outlet communicating with the vent passage leading to the adsorption canister, and an opening in a lower region of the chamber to allow fuel to enter the chamber, the further float abutting against the vent outlet to close the vent outlet when the float is raised by fuel entering the chamber through the lower opening, thus provoking nozzle shut off of a filling nozzle by providing a back pressure within the fuel tank causing the fuel level to rise in the filler pipe to define a maximum filling level.

A weight, such as a steel ball, may be located within the chamber beneath the float to push the float against the vent outlet and close the vent outlet if the vehicle is inverted in the event of a roll-over, the base region of the chamber preferably being provided with upwardly inclined ramped surfaces whereby, when the vehicle is inclined beyond a predetermined angle, the weight slides or rolls up said inclined surface, thus raising the float into contact with the vent outlet.

In one embodiment of the present invention, the at least one upper fuel inlet of the liquid trap communicates with the vent passage downstream of the fill limit device. Preferably the float is adapted to engage and close the at least one upper fuel inlet when the fuel level in the chamber exceeds a predetermined level to prevent liquid fuel from entering the vent passage.

In a second embodiment, the liquid/gas separation means further comprises a separating chamber located above said liquid trap chamber, said separating chamber having a vent inlet communicating with the headspace of the fuel tank, an upper vent outlet communicating with a vent passage upstream of the fill limit device, said at least one upper fuel inlet of the liquid trap chamber being formed in a dividing wall between the separating chamber and the liquid trap chamber to allow fuel collected in the separating chamber to drain into the liquid trap chamber. Preferably said separating chamber is provided with a plurality of internal walls defining a convoluted path between the vent inlet and the vent outlet.

Preferred embodiments of the present invention will now be described, by way of example only, with reference to the accompanying drawings, in which:-
Fig. 2 is a schematic view of a fuel tank venting and vapour recovery apparatus according to a first embodiment of the present invention;
Fig. 3a is a schematic view of the apparatus of Fig. 2 showing the fuel level at static conditions when the vehicle is parked on level ground;
Fig. 3b is a schematic view of the apparatus of Fig. 2 showing the fuel level at static conditions when the vehicle is parked on an inclined surface;
Fig. 3c is a schematic view of the apparatus of Fig. 2 showing the fuel level at static conditions when the vehicle is parked on an inclined surface;

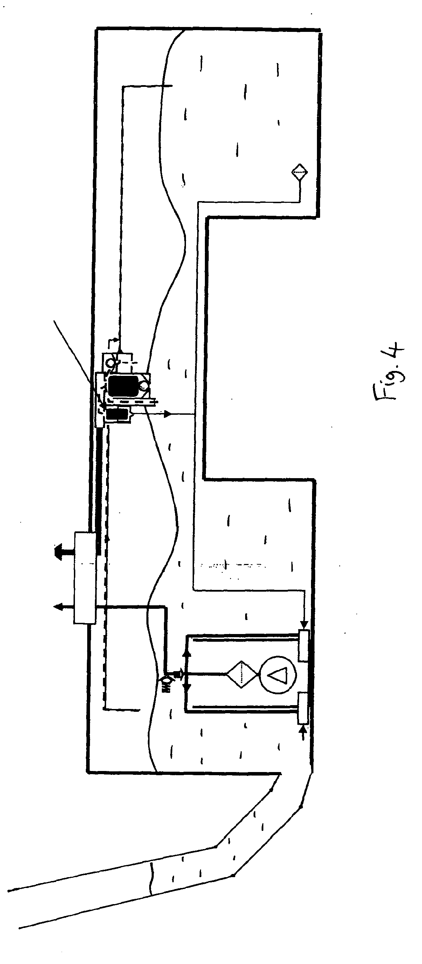

Fig. 4 is a schematic view of the apparatus of Fig. 2 showing the fuel level in dynamic condition when the vehicle is moving;

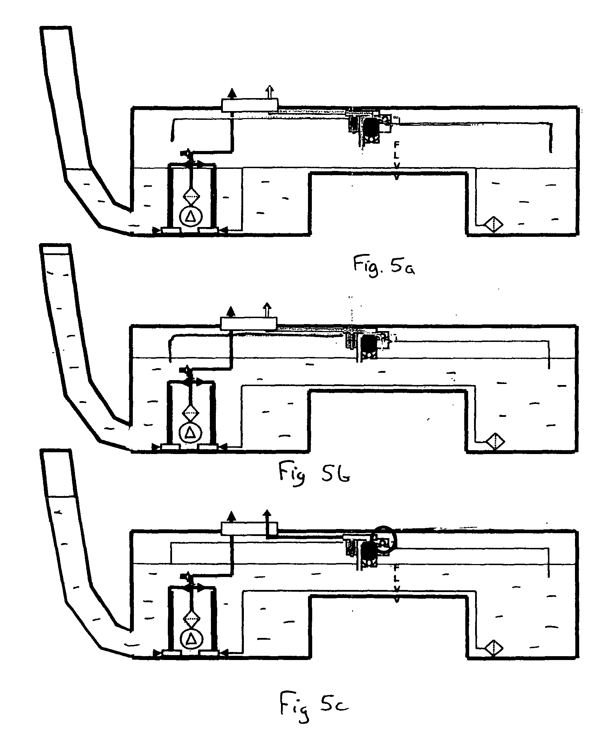

Fig. 5a is a schematic view of the apparatus of Fig. 2 showing the fuel level in the fuel tank and filler pipe during a filling operation;
Fig. 5b is a schematic view of the apparatus of Fig. 2 showing the fuel level in the fuel tank and filler pipe during a filling operation when the fuel level reaches the fill level vent valve;
Fig. 5c is a schematic view of the apparatus of Fig. 2 showing the fuel level in the fuel tank and filler pipe during a filling operation when the fuel tank is full;
Fig. 6a is a detailed view of the venting module of the fuel tank venting and vapour recovery apparatus of Fig. 2 illustrating the normal operation of the liquid trap;
Fig. 6b is a detailed view of the venting module of the fuel tank venting and vapour recovery apparatus of Fig. 2 illustrating the operation of the liquid trap when empty;
Fig. 6c is a detailed view of the venting module of the fuel tank venting and vapour recovery apparatus of Fig. 2 illustrating the operation of the liquid trap when full;
Fig. 7 is a schematic view of a fuel tank venting and vapour recovery apparatus according to a second embodiment of the present invention;
Fig. 8 is a detailed view of the venting module of the apparatus of Fig. 7;
Fig. 9 is a sectional view of the venting module of the apparatus of Fig. 7 along line B-B of Fig. 10; and
Fig. 10 is a sectional view of the venting module along line A-A of Fig. 9; and
Fig. 11 is a sectional view of the venting module along line C-C of Fig. 10.

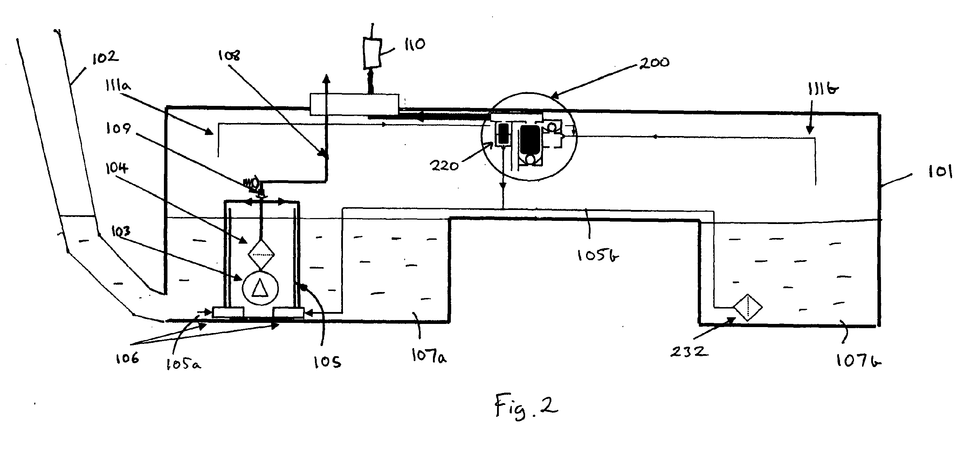

As shown in Fig. 2, a fuel tank venting and vapour recovery apparatus according to a first embodiment of the present invention is similar to the prior art apparatus shown in Fig. 1 except that the numerous separate vent valves and components of the known apparatus are replaced by a single venting module 200 containing a number components as will be described in more detail below.

The fuel tank 101 contains a fuel module 100 comprising a fuel pump 103 and a fuel filter 104 contained with a reservoir 105. One or more venturi jet pumps 106 are provided for drawing fuel into the fuel reservoir 105 via fuel lines 105a,105b extending from the reservoir 105 to the lowermost regions of the fuel tank 107a, 107b to effectively drain said lowermost regions. A fuel delivery line 108 extends from the fuel pump 103, out of the fuel tank 101 to deliver fuel to the fuel system of the engine. A check valve 109 is provided in the fuel delivery line 108 to prevent fuel from being syphoned back from the fuel delivery line when the fuel pump 103 is switched off. The fuel tank 101 is provided with a filler pipe 102 to allow the tank to be refilled with fuel when required. Such arrangement is conventional and does not form part of the venting and vapour recovery apparatus of the present invention.

The venting module 200 is provided in the upper region of the fuel tank 101 to control the venting of fuel vapour and air from the headspace within the fuel tank. The venting module 200 communicates with an adsorption canister 110 containing activated charcoal within which fuel vapour is trapped.

The trapped fuel vapour is drawn out of the canister 110 to be burnt in the combustion chambers of the engine, as is known in the art.

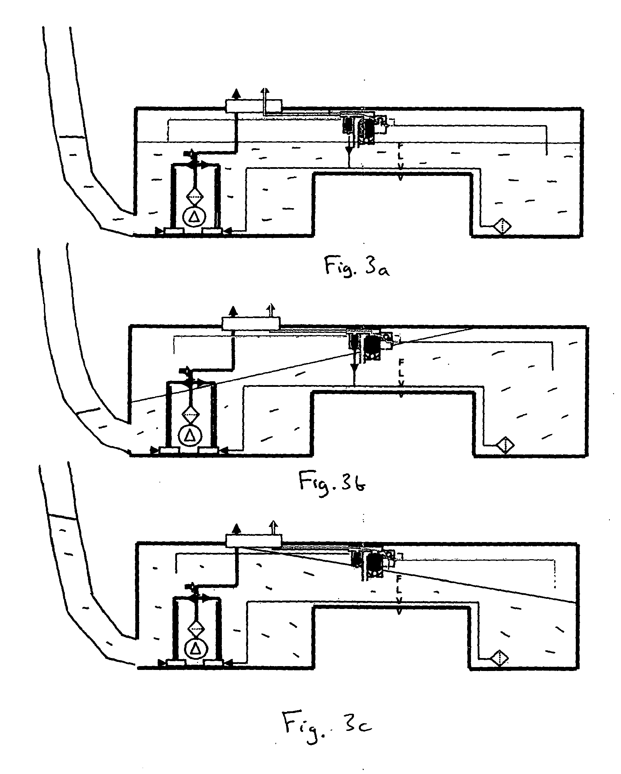

A plurality of vent pipes 111 a, 111 b, typically three or four depending on the shape of the fuel tank, extend from the venting module 200 to respective locations adjacent the uppermost regions of the fuel tank 101, to ensure that the fuel tank headspace, containing a mixture of air and fuel vapour, communicates with the venting module 200 via at least one of said vent pipes 111 a, 111 b regardless of the angle at which the vehicle is parked or operated, as illustrated in Figs 3a, 3b and 3c.

Unlike known systems, the inlet end of each vent pipe 111 a, 111 b need not be provided with a float valve to close the inlet should it become submerged in fuel, simplifying the assembly of the system and providing improved reliability, because the venting module 200 is provided with integrated means for separating liquid fuel from fuel vapour/air in the vent system, as will become clear from the following description.

The venting module 200 comprises a number of functional features in a single module, namely a fuel tank fill limit device, overfill preventing means, roll-over leakage prevention means, and liquid/gas separation means for preventing contamination of the adsorption canister with liquid fuel.

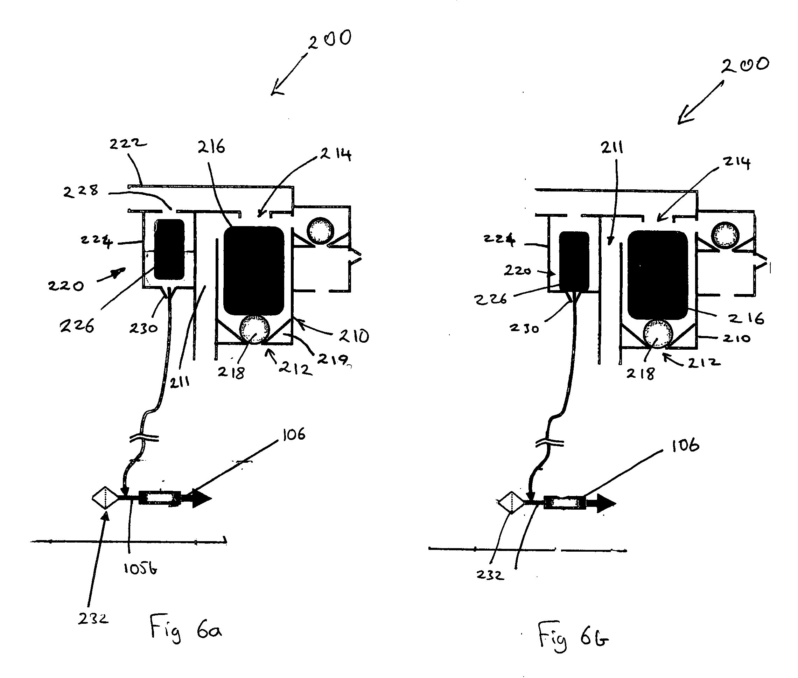

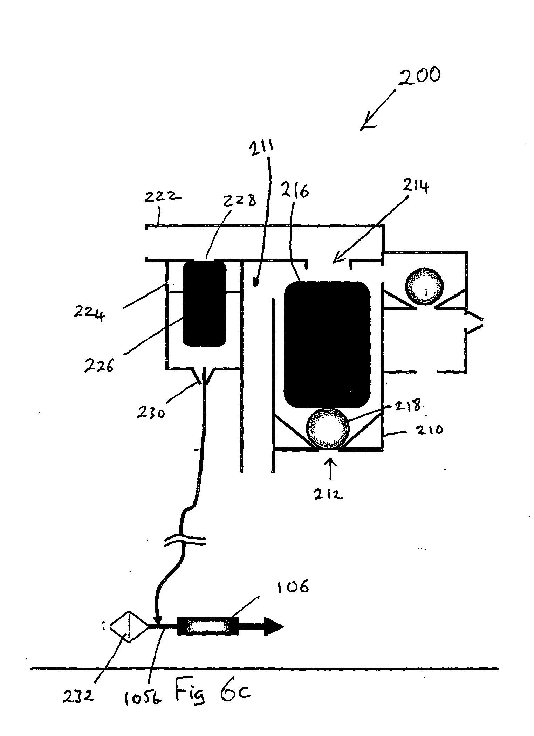

As can be best seen from Fig 6c, the fuel tank fill limit device comprises a chamber 210 having a vent inlet 211 communicating with the fuel tank headspace, and an upper vent outlet port 214 communicating with a vent line leading to the adsorption canister 110, and an opening 212 in a lower region of the chamber 210 to allow fuel to enter the chamber 212. A buoyant float 216 is provided within the chamber 210, the float abutting against a valve seat of the outlet port 214 to close the upper outlet port 214 when the float is raised by fuel entering the chamber 210 through the lower opening 212, thus provoking nozzle shut off of a filling nozzle by providing a back pressure within the fuel tank 101 causing the fuel level to rise in the filler pipe to define a maximum filling level.

A steel ball 218 is located within the chamber 210 beneath the float 216 to push the float 216 against the valve seat of the outlet port 214 and close the outlet port 214 if the tank (and vehicle) is inverted in the event of a roll-over, or when the vehicle is inclined beyond a certain angle (by virtue of ramped surfaces 219 in the base of the chamber 210 up which the wall may roll).

The venting module 200 also includes a liquid/gas separation means in the form of a liquid trap 220 for draining liquid fuel from the vent passage 222 downstream of the fill limit device. The liquid trap 220 comprises a chamber 224 containing a buoyant float 226. The chamber 224 has an upper fuel inlet 228 communicating with the vent passage 222 and a lower drain port 230. The drain port 230 is connected to one of the fuel lines 105b upstream of its associated the venturi jet pump 106 whereby liquid fuel collected in the chamber 224 of the liquid trap 220 is drawn into the fuel line 105b by means of the vacuum produced by the venturi jet pump 106. The float 226 ensures that air is not drawn into the fuel line 105b, closing the drain port 230 of the chamber 224 when the chamber is empty (as shown in Fig 6b), thus enabling the use of an existing jet pump. The float 226 also cooperates with the upper fuel inlet 228 to close the fuel inlet to prevent the passage of liquid fuel into the vent passage 22 in the unlikely event the chamber 224 should become full of fuel (as shown in Fig 6c).

The inlet end of the fuel line 105b to which the drain port 230 of the liquid trap 220 is connected is provided with a strainer 232 (typical mesh size 70µm) to ensure that the liquid trap 220 is drained even when the inlet end of the fuel line 105b is not in contact with fuel. The surface tension of the liquid in the strainer will ensure that there is sufficient vacuum at the drain port 230 of the chamber 224 to draw fuel from the chamber 224.

In the first embodiment of the present invention, fuel vapour and liquid fuel enter the liquid trap 200 downstream of the fuel tank fill limit device. Due to the pressure drop through the fill limit device when the tank is nearly full, caused by the restriction of the outlet port 214 above the float 216, the pressure at the entrance to the vent passage 222 can fall below the pressure at the drain port 230. This can cause fuel to be drawn up into the liquid trap 220 from the fuel line 105b.

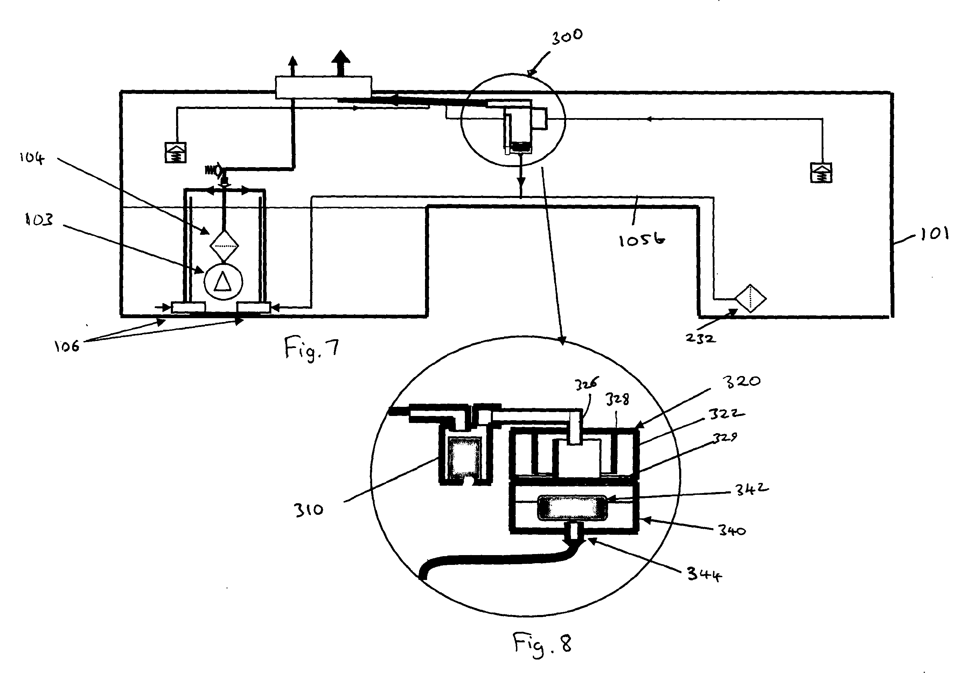

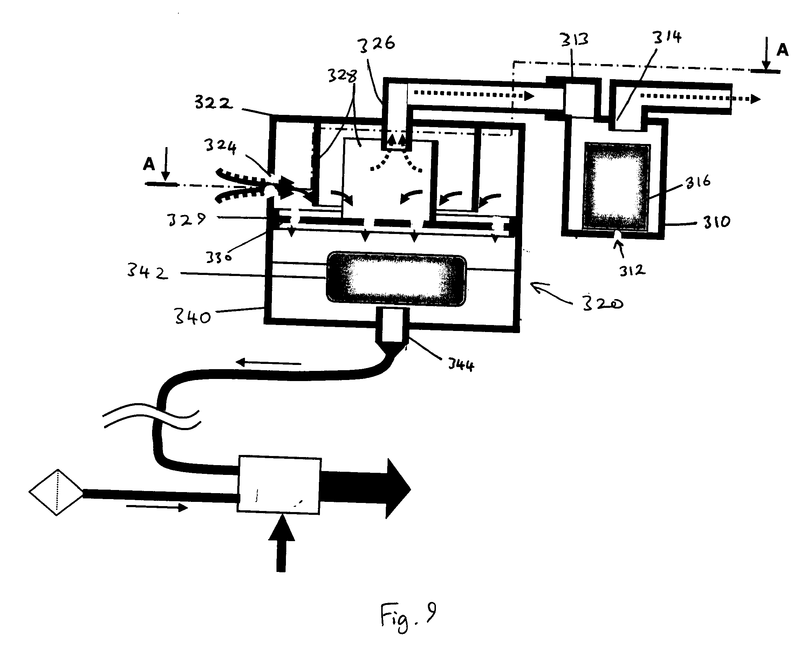

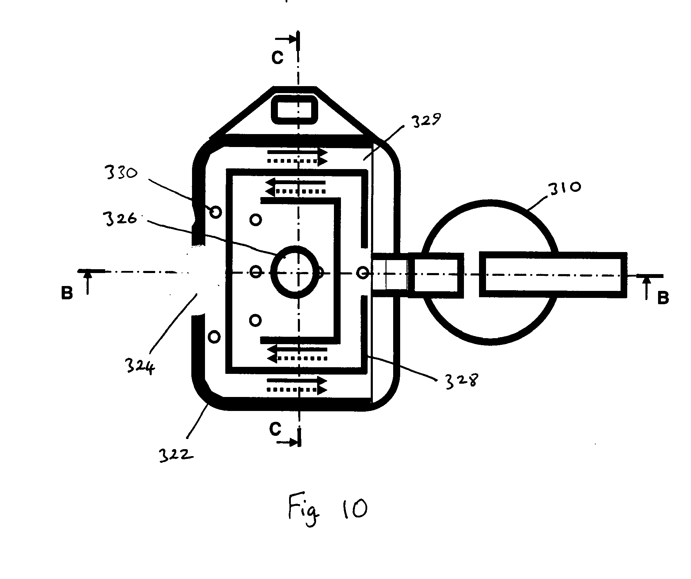

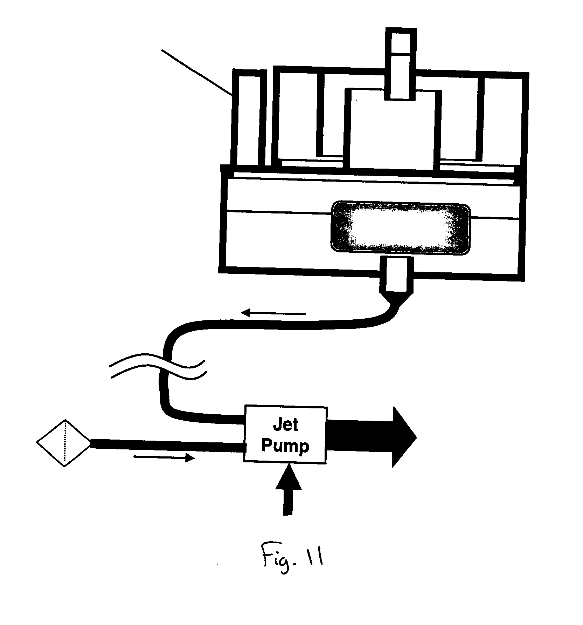

The second embodiment of the present invention, illustrated in Figs. 7 to 11, avoids this problem by providing the liquid trap 320 upstream of the fuel tank fill limit device.

In the second embodiment of the present invention, the venting module 300 comprises a fuel tank fill limit device comprising a chamber 310 having a lower opening 312 through which fuel can pass into the chamber. An upper region of the chamber communicates with a vent line 313 from a liquid trap 320, as will be described below, and has a vent outlet port 314 communicating with a vent port leading to an adsorption canister. A buoyant float 316 is provided within the chamber 310, the float abutting against a valve seat of the outlet port 314 to close the outlet port 314 when the float is raised by fuel entering the chamber 310 through the lower opening 312, thus provoking nozzle shut off of a filling nozzle by providing a back pressure within the fuel tank 101, causing the fuel level to rise in the filler pipe to define a maximum filling level.

The venting module 300 also includes a liquid/gas separation means upstream of the fill limit device in the form of a liquid trap 320 for separating liquid fuel from the fuel vapour/air mixture exiting the fuel tank vent and actively draining liquid fuel from the liquid trap.

An upper part of the liquid trap comprises a chamber 322 having a vent inlet 324 positioned above the maximum fuel level of the fuel tank (governed by the fuel tank fill limit device). A vent outlet 326 is provided in a upper central region of the chamber communicating with the vent inlet of the chamber 310 of the fill limit device. The chamber 322 is provided with a series of walls 328 arranged to provide a convoluted path between the vent inlet 324 and the vent outlet 326 to prevent liquid fuel from reaching the vent outlet 326.

The lower wall 329 of the chamber 322 is provided with a plurality of apertures 330 allowing any liquid fuel entering the chamber 322 to drain into the lower chamber 340. The lower chamber 340 contains a buoyant float 342 and is provided with lower drain port 344 connected to one of the fuel lines 105b upstream of its associated the venturi jet pump 106, whereby liquid fuel collected in the lower chamber 340 of the liquid trap 320 is drawn into the fuel line 105b by means of the vacuum produced by the venturi jet pump 106. The float 342 ensures that air is not drawn into the fuel line 105b, closing the drain port 344 of the chamber 340 when the chamber is empty.

Various modifications and variations to the described embodiments of the invention will be apparent to those skilled in the art without departing from the scope of the invention as defined in the appended claims. Although the invention has been described in connection with specific preferred embodiments, it should be understood that the invention as claimed should not be unduly limited to such specific embodiments.

## Claims

1. A venting and vapour recovery apparatus for a vehicle fuel tank, the fuel tank containing a fuel module including a fuel reservoir containing a fuel pump and one or more venturi jet pumps for drawing fuel from the lowermost regions of the fuel tank into the reservoir, the apparatus comprising a vent module (200,300) locatable within an upper region of the fuel tank for venting fuel vapour and air from the headspace of the fuel tank through a vent passage communicating with an adsorption canister, the vent module (200,300) comprising a liquid/gas separation means for preventing contamination of the adsorption canister with liquid fuel, wherein the liquid/gas separation means comprises a liquid trap (220,320) for draining liquid fuel from the vent module, the liquid trap (220) comprising a chamber (224,340), the chamber (224,340) being provided with at least one upper fuel inlet (228,330), communicating with the vent passage of the vent module (200,300), and a lower drain port (230,344), the drain port (230,344) communicating with the upstream side of a venturi jet pump associated with the fuel module, whereby liquid fuel collected in the chamber (224,340) of the liquid trap (220,320) is actively drained by means of the vacuum produced by the venturi jet pump (106).

2. An apparatus as claimed in claim 1, wherein a buoyant float (226,342) is provided within the liquid trap chamber (224,340), said float engaging the drain port (230,344) of the liquid trap chamber (224,340) to close said drain port (230,344) when the liquid trap chamber (224,340) is drained of fuel to prevent air from being drawn into the venturi jet pump.

3. An apparatus as claimed in claim 2, wherein the vent module (200,300) further comprises a fuel tank fill limit device for provoking nozzle shut off when the fuel in the fuel tank reaches a predetermined level during a filling operation, the fuel tank fill limit device comprising a further float (216,316) arranged to close communication between the vent passage and the headspace of the fuel tank when said predetermined fuel level is reached.

4. An apparatus as claimed in claim 3, wherein the further float (216,316) the fuel tank fill limit is provided in a chamber (210,310) having a vent inlet (211) communicating with the fuel tank headspace, and an upper vent outlet (214) communicating with the vent passage leading to the adsorption canister (110), and an opening (212) in a lower region of the chamber (210) to allow fuel to enter the chamber (212), the further float (216,316) abutting against the vent outlet (214) to close the vent outlet (214) when the float (216,316) is raised by fuel entering the chamber (210) through the lower opening (212), thus provoking nozzle shut off of a filling nozzle by providing a back pressure within the fuel tank (101) causing the fuel level to rise in the filler pipe to define a maximum filling level.

5. An apparatus as claimed in claim 4, wherein a weight (218), such as a steel ball, is located within the chamber (210) beneath the float (216) to push the float (216) against the vent outlet (214) and close the vent outlet (214) if the vehicle is inverted in the event of a roll-over, the base region of the chamber preferably being provided with upwardly inclined ramped surfaces (219) whereby, when the vehicle is inclined beyond a predetermined angle, the weight (218) slides or rolls up said inclined surface, thus raising the float (216) into contact with the vent outlet (214).

6. An apparatus as claimed in any of claims 3 to 5, wherein said at least one upper fuel inlet (228) of the liquid trap (320) communicates with the vent passage (222) downstream of the fill limit device.

7. An apparatus as claimed in claim 6, wherein the float (226) is adapted to engage and close the at least one upper fuel inlet (228) when the fuel level in the chamber (224) exceeds a predetermined level to prevent liquid fuel from entering the vent passage (222).

8. An apparatus as claimed in any of claims 3 to 5, wherein the liquid/gas separation means further comprises a separating chamber (322) located above said liquid trap chamber (340), said separating chamber having a vent inlet (324) communicating with the headspace of the fuel tank, an upper vent outlet (326) communicating with a vent passage upstream of the fill limit device, said at least one upper fuel inlet (228) of the liquid trap chamber (340) being formed in a dividing wall (329) between the separating chamber (322) and the liquid trap chamber (340) to allow fuel collected in the separating chamber (322) to drain into the liquid trap chamber (340).

9. An apparatus as claimed in claim 8, wherein said separating chamber (322) is provided with a plurality of internal walls (328) defining a convoluted path between the vent inlet (324) and the vent outlet (326).
